# EUROPEAN PATENT APPLICATION

(11) **EP 4 489 518 A1**
(43) Date of publication of application: **08.01.2025**
(21) Application number: 23766359.6
(22) Date of filing: 31.01.2023
(51) Int. Cl.: H04W 92/04, H04W 28/00

(54) **INFORMATION PROCESSING DEVICE, INFORMATION PROCESSING SYSTEM, AND PROGRAM**

(30) Priority: 08.03.2022 JP 2022035366
(71) Applicant: Sony Group Corporation, Tokyo 108-0075 (JP)
(72) Inventor: TOYODA, Naoyuki, Tokyo 108-0075 (JP)
(74) Representative: D Young & Co LLP
(86) International application number: PCT/JP2023/002962
(87) International publication number: WO 2023/171179

(57) **Abstract**

An information processing apparatus (100) includes a control unit (130). The control unit (130) acquires, from a terminal apparatus (40), terminal information regarding the terminal apparatus (40). The control unit (130) controls a mobile network (20) via a Network Exposure Function (NEF) (245) or a Service Capability Exposure Function (SCEF) on the basis of the terminal information.

## Description

### Field

The present disclosure relates to an information processing apparatus, an information processing system, and a program.

### Background

In recent years, in cellular wireless communication, a new technology has been introduced in order to cope with diversification of communication services. For example, in 5G, a single network infrastructure can be divided into a plurality of network slices and used. For example, a third party can utilize network slices to provide services to users via a mobile network.

The mobile network discloses, for example, a communication status with a terminal to a third party application function (AF). As a result, the AF can establish a PDU session according to network capability.

### Citation List

### Patent Literature

Patent Literature 1: JP 2021-513269 A

### Summary

### Technical Problem

In the above-described technology, the AF acquires the communication status from each Nework Function (NF) of the mobile network via a Network Exposure Function (NEF) or a Service Capability Exposure Function (SCEF). Here, information acquired from the NF by the AF is information regarding the communication status in a certain period or statistical data of the communication status. As described above, in the above-described technology, it is difficult for the AF to acquire in real time detailed information regarding the communication status, for example, data for each wireless frame, and the like.

A radio wave propagation environment between a user and the mobile network changes from moment to moment. Thus, it is desirable that a third party acquires detailed information regarding the communication status in real time to follow this change and provide an appropriate service to the user.

Thus, the present disclosure provides a mechanism capable of providing an appropriate service via the mobile network.

Note that the above problem or object is merely one of a plurality of problems or objects that can be solved or achieved by a plurality of embodiments disclosed in the present specification.

### Solution to Problem

An information processing apparatus of the present disclosure includes a control unit. The control unit acquires, from a terminal apparatus, terminal information regarding the terminal apparatus. The control unit controls a mobile network via a Network Exposure Function (NEF) or a Service Capability Exposure Function (SCEF) on the basis of the terminal information.

### Brief Description of Drawings

FIG. 1 is a diagram illustrating a configuration example of a communication system according to a proposed technology of the present disclosure.
FIG. 2 is a diagram for explaining an example of E2E communication in the communication system.
FIG. 3 is a diagram for explaining an outline of communication processing according to an embodiment of the present disclosure.
FIG. 4 is a diagram illustrating a configuration example of a mobile network according to the embodiment of the present disclosure.
FIG. 5 is a block diagram illustrating a configuration example of an information processing apparatus according to the embodiment of the present disclosure.
FIG. 6 is a block diagram illustrating a configuration example of a terminal apparatus according to the embodiment of the present disclosure.
FIG. 7 is a sequence diagram illustrating an example of a flow of the communication processing according to the embodiment of the present disclosure.
FIG. 8 is a flowchart illustrating an example of a flow of call and service connection processing according to the embodiment of the present disclosure.
FIG. 9 is a table for explaining an example of a setting for a service according to the embodiment of the present disclosure.
FIG. 10 is a sequence diagram illustrating an example of a flow of setting processing according to the embodiment of the present disclosure.
FIG. 11 is a table for explaining an example of NS requirements according to the embodiment of the present disclosure.
FIG. 12 is a flowchart illustrating an example of a flow of notification processing according to the embodiment of the present disclosure.
FIG. 13 is a table illustrating an example of a notification instruction according to the embodiment of the present disclosure.
FIG. 14 is a diagram for explaining an application example of the communication system according to the embodiment of the present disclosure.
FIG. 15 is a table for explaining a setting example of network slices according to the application example of the present disclosure.
FIG. 16 is a diagram for explaining another application example of the communication system according to the embodiment of the present disclosure.
FIG. 17 is a table for explaining a setting example of network slices according to the other application example of the present disclosure.
FIG. 18 is a diagram for explaining an example of communication processing according to another application example of the present disclosure.
FIG. 19 is a diagram for explaining another example of the communication processing according to the other application example of the present disclosure.
FIG. 20 is a hardware configuration diagram illustrating an example of a computer that implements functions of the information processing apparatus according to the present disclosure.

### Description of Embodiments

Hereinafter, an embodiment of the present disclosure will be described in detail with reference to the accompanying drawings. Note that, in the present specification and the drawings, components having substantially the same functional configuration are denoted by the same reference numerals to omit duplicate description.

Furthermore, in the present specification and the drawings, specific values may be indicated and described, but the values are merely examples, and other values may be applied.

One or a plurality of embodiments (including examples and modifications) described below can each be implemented independently. On the other hand, at least some of the plurality of embodiments described below may be appropriately combined with at least some of other embodiments and implemented. The plurality of embodiments can include novel features different from each other. Thus, the plurality of embodiments can contribute to solving mutually different objects or problems, and can exhibit mutually different effects.

### <<1. Introduction>>

### <1.1. Example of communication system>

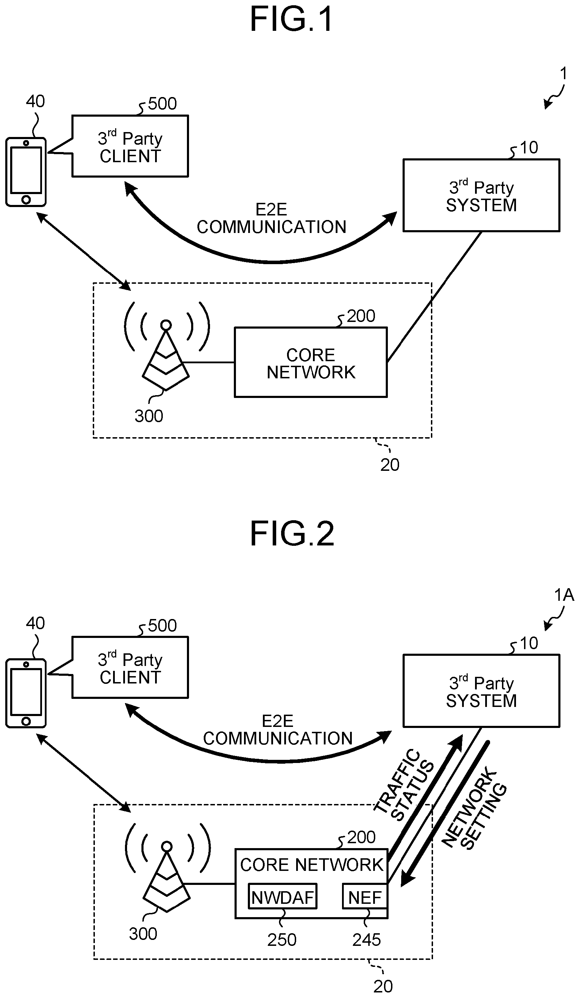

First, an outline of a communication system 1 according to an embodiment of the present disclosure will be described. FIG. 1 is a diagram illustrating a configuration example of the communication system 1 according to a proposed technology of the present disclosure.

The communications system 1 includes a third party system 10, a mobile network 20, and a terminal apparatus 40.

The mobile network 20 is, for example, a network operated and/or managed by a Mobile Network Operator (MNO). Alternatively, the mobile network 20 may be a local cellular network (for example, local 5G). Here, the local cellular network can broadly include a form called a private network, a non public network, or the like. The mobile network 20 includes a base station 300 and a core network 200.

The third party system 10 is a system operated and/or managed by a service provider. The third party system 10 provides services to users via the mobile network 20.

The terminal apparatus 40 is a wireless communication apparatus that performs wireless communication with the base station 300 of the mobile network 20. The terminal apparatus 40 functions as a third party client 500 that receives a service from the third party system 10 by executing a predetermined application including an external device. As described above, the terminal apparatus 40 and the third party system 10 perform End to End (E2E) communication via the mobile network 20.

Note that, in the following description, in order to simplify the description, the mobile network 20 will be described as a network of a cellular communication system such as 5G New Radio (NR) unless otherwise specified, but the mobile network 20 is not limited thereto. The mobile network 20 may be, for example, a cellular communication system such as Long Term Evolution (LTE) or a network such as WiFi (registered trademark) connected by a Non-3GPP InterWorking Function (N3IWF).

### <1.2. Problem>

FIG. 2 is a diagram for explaining an example of E2E communication in a communication system 1A. As illustrated in FIG. 2, the core network 200 of the communication system 1A includes a Network Exposure Function (NEF) 245 and a Network Data Analytics Function (NWDAF) 250.

The NEF 245 functions as an interface between the mobile network 20 and the third party system 10. The third party system 10 can collect information (for example, a traffic status) in the mobile network 20 via the NEF 245. Furthermore, the third party system 10 can perform various settings (network settings) for the mobile network 20 via the NEF 245.

Note that, here, it is assumed that the core network 200 is a 5G core network (5G Core (5GC)/Next Generation Core (NGC)), but may be an LTE core network (Evolved Packet Core (EPC)). In this case, the core network 200 includes a Service Capability Exposure Function (SCEF) instead of the NEF 245.

The NWDAF 250 has a function of network analysis processing. The NWDAF 250 generates measurement data and statistical data of the mobile network 20. The third party system 10 can acquire the statistical data and the like calculated by the NWDAF 250 via the NEF 245.

Using these mechanisms, the third party system 10 performs control to maintain Quality of Service (QoS) on the mobile network 20. Furthermore, the third party system 10 monitors a Service Level Agreement (SLA) established by a third party with a business operator who operates and/or manages the mobile network 20. Furthermore, if the mobile network 20 does not meet the SLA, the third party system 10 can notify the mobile network 20 to that effect.

As described above, the third party system 10 can collect information regarding communication such as a traffic status and the statistical data analyzed by the NWDAF 250 from the mobile network 20 via the NEF 245.

However, the information obtained via the NEF 245 is the statistical data analyzed by the NWDAF 250 as described above, or information regarding a communication status in a certain period. As described above, it is difficult for the third party system 10 to collect, via the NEF 245, temporally detailed granularity information such as data for each wireless frame in real time.

In particular, in wireless communication such as cellular communication, a radio wave propagation environment in a wireless link between the terminal apparatus 40 and the base station 300 changes from moment to moment. In order to maintain quality of a service to be provided to a user, it is important for the third party system 10 to follow the radio wave propagation environment that changes from moment to moment. For that purpose, it is desirable for the third party system 10 to acquire information in units of subframes and/or slots that are minimum units on a wireless protocol.

Furthermore, a Medium Access Control (MAC) scheduler (not illustrated) of the base station 300 can select a coding rate and/or a modulation scheme to be used for wireless communication with the terminal apparatus 40 in order to adapt to a wireless environment. However, the selection performed by the MAC scheduler in this case is adaptive control for satisfying the QoS designated from an upper layer and/or an upper network. Since the base station 300 does not have subscriber information or service information regarding the third party system 10, it is difficult to select the QoS suitable for the propagation environment.

Furthermore, with development of communication, use cases of mobile communication have expanded to industrial fields and the like after 5G. Along with this, the importance is increasing of guaranteeing communication quality in E2E communication by the third party system 10.

For that reason, it is desirable that the third party system 10 grasp not only a status of wireless communication but also statuses of routing and buffering in the core network 200 in real time.

Furthermore, outside the mobile network 20 such as the third party system 10, traffic engineering is required combining a communication status of the mobile network 20 and a viewpoint of user experience. As described above, it is desirable for the third party system 10 outside the mobile network 20 to provide the best communication environment for the user.

As described above, in the conventional communication system 1A, when the third party system 10 provides a service to the terminal apparatus 40, detailed information regarding the terminal apparatus 40 (hereinafter, also referred to as terminal information) cannot be acquired in real time. For that reason, there has been a problem that it is difficult for the third party system 10 to provide an appropriate service to the user via the mobile network 20.

### <1.3. Outline of proposed technology>

Thus, in the embodiment of the present disclosure, an information processing apparatus 100 of the third party system 10 acquires, from the terminal apparatus 40, the terminal information regarding the terminal apparatus 40. The information processing apparatus 100 controls the mobile network 20 via an NEF 345 on the basis of the acquired terminal information.

As a result, the information processing apparatus 100 of the third party system 10 can appropriately control the mobile network 20 on the basis of the terminal information on the terminal apparatus 40. Furthermore, the third party system 10 can provide an appropriate service to the user.

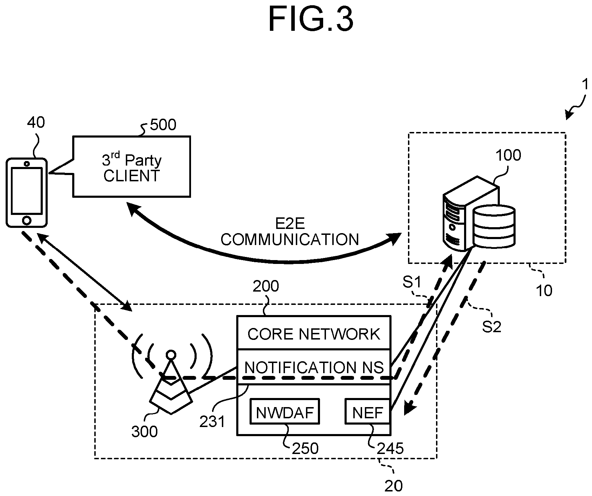

FIG. 3 is a diagram for explaining an outline of communication processing according to the embodiment of the present disclosure. As illustrated in FIG. 3, the third party system 10 according to the present embodiment includes the information processing apparatus 100. Furthermore, the communication system 1 according to the present embodiment is different from the communication system 1A of FIG. 2 in that a notification Network Slice (NS) 231 is set in the mobile network 20.

The notification NS 231 is a network slice used by the terminal apparatus 40 to notify the information processing apparatus 100 of the terminal information. The notification NS 231 is set by the mobile network 20 in response to a request from the information processing apparatus 100.

As illustrated in FIG. 3, the information processing apparatus 100 acquires the terminal information from the terminal apparatus 40 via the notification NS 231, for example (step S1). Examples of the terminal information include information regarding a wireless environment in the wireless link between the terminal apparatus 40 and the base station 300.

The information processing apparatus 100 controls the mobile network 20 via the NEF 245 on the basis of the acquired terminal information (step S2). For example, in a case where the wireless environment deteriorates and a desired QoS is not satisfied, the information processing apparatus 100 requests the mobile network 20 to change a setting of the mobile network 20 so that the QoS is satisfied.

As described above, the information processing apparatus 100 acquires the terminal information by using the notification NS 231, whereby the information processing apparatus 100 can acquire more detailed information regarding the terminal apparatus 40 in real time. Furthermore, the information processing apparatus 100 can provide a better quality service to the user by controlling the mobile network 20 via the NEF 245 by using the terminal information.

### <<2. Configuration example of communication system>>

### <2.1. Configuration example of mobile network>

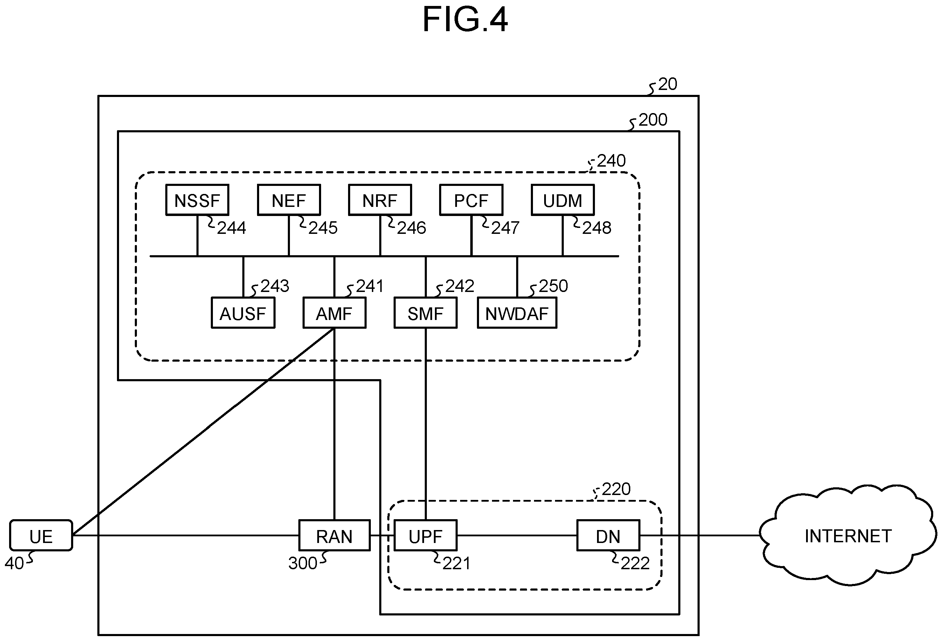

FIG. 4 is a diagram illustrating a configuration example of the mobile network 20 according to the embodiment of the present disclosure. The 5G core network 200 is also referred to as 5G Core (5GC)/Next Generation Core (NGC). Hereinafter, the 5G core network 200 is also referred to as the 5GC/NGC 200. The 5GC/NGC 200 is connected to user equipment (UE) via an (R)AN. Note that the UE is an example of the terminal apparatus 40, and hereinafter, the terminal apparatus 40 is also referred to as the UE 40.

The (R)AN has a function of enabling connection to a Radio Access Network (RAN) and connection to an Access Network (AN) other than the RAN. The (R)AN includes a base station apparatus called a gNB or an ng-eNB. The base station 300 corresponds to, for example, the gNB of the (R)AN. Hereinafter, the base station 300 is also referred to as an (R)AN 30.

The 5GC/NGC 200 includes a user plane function group 220 and a control plane function group 240.

The user plane function group 220 includes a User Plane Function (UPF) 221 and a Data Network (DN) 222. The UPF 221 has a function of user plane processing. The UPF 221 includes a routing/transferring function of data handled in a user plane. The DN 222 has a function of enabling connection to a cellular operator's own service, the Internet, or a third party service. However, although the DN is included in the core network 200 in FIG. 4, the DN may be outside the core network 200.

The control plane function group 240 includes an Access Management Function (AMF) 241, a Session Management Function (SMF) 242, an Authentication Server Function (AUSF) 243, a Network Slice Selection Function (NSSF) 244, the Network Exposure Function (NEF) 245, a Network Repository Function (NRF) 246, a Policy Control Function (PCF) 247, a Unified Data Management (UDM) 248, and the Network Data Analytics Function (NWDAF) 250.

The AMF 241 has functions such as registration processing, connection management, and mobility management of the UE 40. The SMF 242 has functions such as session management and IP allocation and management of the UE 40. The AUSF 243 has an authentication function. The NSSF 244 has a function regarding selection of a network slice. The NEF 245 has a function of providing a capability of a network function and an event to a third party, an application function, and an edge computing function.

The NRF 246 has a function of finding a network function and holding a profile of the network function. The PCF 247 has a function of policy control. The UDM 248 has functions of generating 3GPP AKA authentication information and processing a user ID. The NWDAF 250 has a function of network analysis processing.

### <2.2. Configuration example of information processing apparatus>

The information processing apparatus 100 functions as, for example, a control unit of the third party system 10, and performs control regarding services to be provided by the third party system 10, such as collection of terminal information, QoS control, and monitoring the SLA. The information processing apparatus 100 can be implemented as one function (for example, an application function) of the third party system 10.

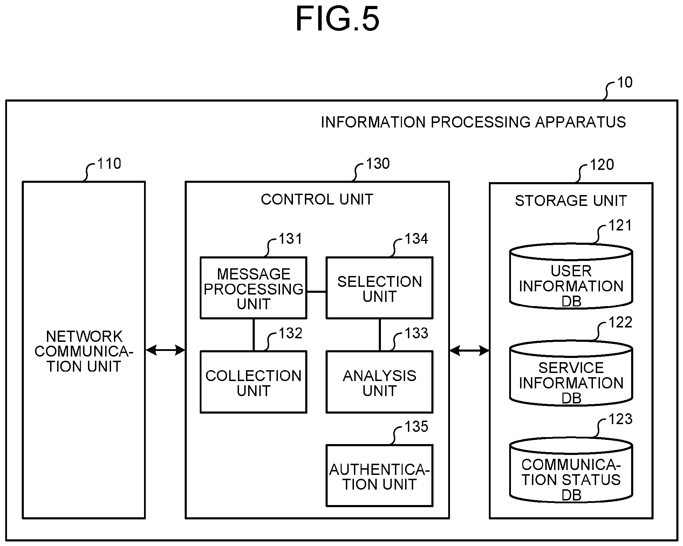

FIG. 5 is a block diagram illustrating a configuration example of the information processing apparatus 100 according to the embodiment of the present disclosure. The information processing apparatus 100 illustrated in FIG. 5 includes a network communication unit 110, a storage unit 120, and a control unit 130. Note that the configuration illustrated in FIG. 5 is a functional configuration, and the hardware configuration may be different from the functional configuration. Furthermore, functions of the information processing apparatus 100 may be implemented in a distributed manner in a plurality of physically separated configurations. For example, various types of processing or functions by the information processing apparatus 100 may be implemented by a server computer or a cloud connected via a network.

### (Network communication unit 110)

The network communication unit 110 is a communication interface for communicating with other apparatuses. The network communication unit 110 may be a network interface or a device connection interface. For example, the network communication unit 110 may include a Local Area Network (LAN) interface such as a Network Interface Card (NIC), or may include a USB interface including a Universal Serial Bus (USB) host controller, a USB port, and the like. Furthermore, the network communication unit 110 may be a wired interface or a wireless interface. An external network with which the network communication unit 110 performs communication is, for example, the Internet, a cloud network, a network unique to a business operator, or the like. The network communication unit 110 functions as a communication means of the information processing apparatus 100.

### (Storage unit 120)

The storage unit 120 is a data readable/writable storage apparatus such as a Dynamic Random Access Memory (DRAM), a Static Random Access Memory (SRAM), a flash memory, or a hard disk. The storage unit 120 functions as a storage means of the information processing apparatus 100.

The storage unit 120 includes a user information database (DB) 121, a service information DB 122, and a communication status DB 123.

The user information DB 121 stores information regarding a user to whom a service is to be provided. The user information DB 121 stores, for example, information regarding the terminal apparatus 40 used by the user. The service information DB 122 stores information regarding the service to be provided to the user. The communication status DB 123 stores information regarding a communication status between the terminal apparatus 40 and the information processing apparatus 100.

### (Control unit 130)

The control unit 130 is a controller that controls each unit of the information processing apparatus 100. The control unit 130 is implemented by, for example, a processor such as a Central Processing Unit (CPU), a Micro Processing Unit (MPU), or a Graphics Processing Unit (GPU). For example, the control unit 130 is implemented by the processor executing various programs stored in a storage apparatus inside the information processing apparatus 100 by using a Random Access Memory (RAM) or the like as a work area. Note that the control unit 130 may be implemented by an integrated circuit such as an Application Specific Integrated Circuit (ASIC) or a Field Programmable Gate Array (FPGA). The CPU, the MPU, the GPU, the ASIC, and the FPGA can all be regarded as controllers.

The control unit 130 includes a message processing unit 131, a collection unit 132, an analysis unit 133, a selection unit 134, and an authentication unit 135. Each of blocks (the message processing unit 131 to the authentication unit 135) constituting the control unit 130 is a functional block indicating a function of the control unit 130. These functional blocks may be software blocks or hardware blocks. For example, each of the functional blocks described above may be one software module implemented by software (including a micro-program), or may be one circuit block on a semiconductor chip (die). Of course, each functional block may be one processor or one integrated circuit. Any method is used for configuring the functional block. Note that the control unit 130 may include functional units different from the functional blocks described above.

### (Message processing unit 131)

The message processing unit 131 determines whether or not terminal information is included in a message received by the network communication unit 110. In a case where the terminal information is included in the message, the message processing unit 131 notifies the collection unit 132 of the terminal information. Furthermore, the message processing unit 131 determines whether or not to transmit a transmission message via the NEF 245. For example, in a case of a transmission message regarding a setting of the mobile network 20, the message processing unit 131 notifies the network communication unit 110 to transmit the transmission message via the NEF 245.

### (Collection unit 132)

The collection unit 132 stores the information regarding the communication status included in the terminal information in the communication status DB 123. In addition to the communication status, the collection unit 132 can store information regarding the terminal apparatus 40 in the communication status DB 123. The communication status DB 123 can also store information other than the communication status.

### (Analysis unit 133)

The analysis unit 133 analyzes the communication status and predicts a trend of a future communication status on the basis of the information regarding the communication status and the like stored in the communication status DB 123.

### (Selection unit 134)

The selection unit 134 selects the QoS on the basis of results of analysis and prediction by the analysis unit 133, for example. For example, in a case where the QoS set in a network slice used by the information processing apparatus 100 to provide a service is not suitable for the QoS of actual communication, the selection unit 134 selects the QoS suitable for the actual communication. For example, the selection unit 134 notifies the mobile network 20 of information regarding the selected QoS via the NEF 245.

### (Authentication unit 135)

The authentication unit 135 performs authentication of a user to whom a service is to be provided, confirmation of the service to be provided to the user, and the like on the basis of the information stored in the user information DB 121 and the service information DB 122.

### <2.3. Configuration example of terminal apparatus>

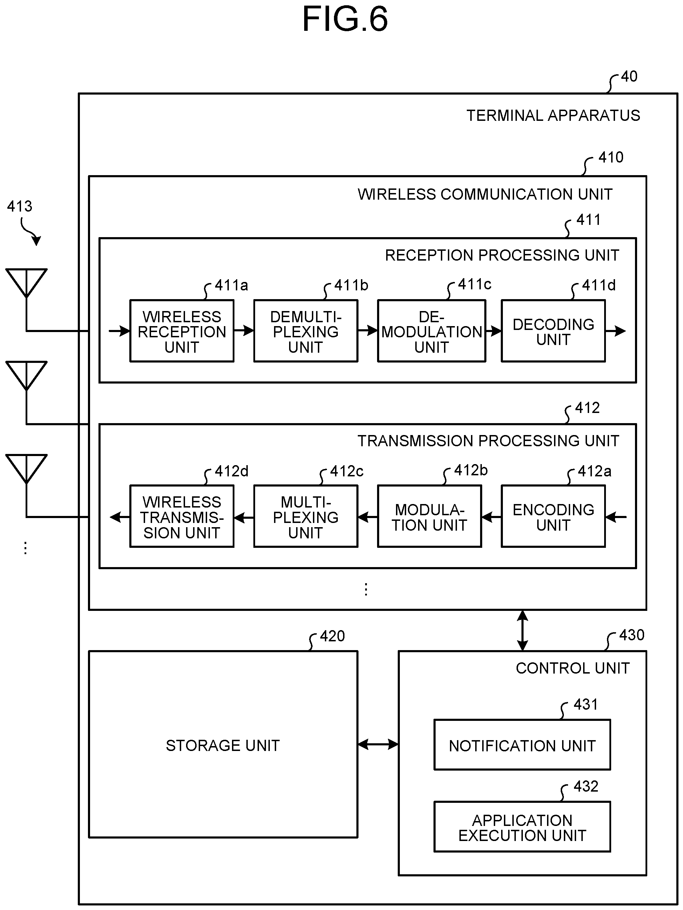

FIG. 6 is a block diagram illustrating a configuration example of the terminal apparatus 40 according to the embodiment of the present disclosure. The terminal apparatus 40 includes a wireless communication unit 410, a storage unit 420, and a control unit 430. Note that the configuration illustrated in FIG. 6 is a functional configuration, and the hardware configuration may be different from the functional configuration. Furthermore, functions of the terminal apparatus 40 may be implemented in a distributed manner in a plurality of physically separated configurations.

### (Wireless communication unit 410)

The wireless communication unit 410 is a wireless communication interface that wirelessly communicates with other communication apparatuses (for example, the base station 300). The wireless communication unit 410 operates according to control of the control unit 430. The wireless communication unit 410 is adaptable to one or a plurality of wireless access methods. For example, the wireless communication unit 410 is adaptable to both NR and LTE. The wireless communication unit 410 may be adaptable to other wireless access methods such as W-CDMA and cdma2000.

The wireless communication unit 410 includes a reception processing unit 411, a transmission processing unit 412, and an antenna 413. The wireless communication unit 410 may include a plurality of the reception processing units 411, a plurality of the transmission processing units 412, and a plurality of the antennas 413. Note that, in a case where the wireless communication unit 410 is adaptable to a plurality of wireless access methods, each unit of the wireless communication unit 410 can be included individually for each wireless access method. For example, the reception processing unit 411 and the transmission processing unit 412 may be individually included for LTE and NR.

The reception processing unit 411 processes an uplink signal received via the antenna 413. The reception processing unit 411 includes a wireless reception unit 411a, a demultiplexing unit 411b, a demodulation unit 411c, and a decoding unit 411d.

The wireless reception unit 411a performs, on the uplink signal, down-conversion, removal of an unnecessary frequency component, control of an amplification level, quadrature demodulation, conversion to a digital signal, removal of a guard interval, extraction of a frequency domain signal by fast Fourier transform, and the like. The demultiplexing unit 411b demultiplexes an uplink channel such as a Physical Uplink Shared Channel (PUSCH) or a Physical Uplink Control Channel (PUCCH), and an uplink reference signal, from a signal output from the wireless reception unit 411a. The demodulation unit 411c demodulates a received signal by using a modulation scheme such as Binary Phase Shift Keying (BPSK) or Quadrature Phase Shift Keying (QPSK) with respect to a modulation symbol of the uplink channel. The modulation scheme used by the demodulation unit 411c may be 16 Quadrature Amplitude Modulation (QAM), 64QAM, or 256QAM. The decoding unit 411d performs decoding processing encoded bits of the uplink channel demodulated. Uplink data and uplink control information decoded are output to the control unit 430.

The transmission processing unit 412 performs processing of transmitting downlink control information and downlink data. The transmission processing unit 412 includes an encoding unit 412a, a modulation unit 412b, a multiplexing unit 412c, and a wireless transmission unit 412d.

The encoding unit 412a encodes the downlink control information and the downlink data input from the control unit 430 by using an encoding method such as block encoding, convolutional encoding, turbo encoding, or Low Density Parity Check (LDPC) code. Modulation unit 412b modulates encoded bits output from the encoding unit 412a by a predetermined modulation scheme such as BPSK, QPSK, 16QAM, 64QAM, or 256QAM. The multiplexing unit 412c multiplexes modulation symbols of channels and a downlink reference signal and arranges the multiplexed symbols in a predetermined resource element. The wireless transmission unit 412d performs various types of signal processing on a signal from the multiplexing unit 412c. For example, the wireless transmission unit 412d performs processing such as conversion into a time domain by fast Fourier transform, addition of a guard interval, generation of a baseband digital signal, conversion into an analog signal, quadrature modulation, up-conversion, removal of an extra frequency component, and power amplification. The signal generated by the transmission processing unit 412 is transmitted from the antenna 413.

### (Storage unit 420)

The storage unit 420 is a data readable/writable storage apparatus such as a DRAM, an SRAM, a flash memory, or a hard disk. The storage unit 420 functions as a storage means of the terminal apparatus 40.

### (Control unit 430)

The control unit 430 is a controller that controls each unit of the terminal apparatus 40. The control unit 430 is implemented by, for example, a processor such as a Central Processing Unit (CPU), a Micro Processing Unit (MPU), or a Graphics Processing Unit (GPU). For example, the control unit 430 is implemented by the processor executing various programs stored in a storage apparatus inside the terminal apparatus 40 by using a Random Access Memory (RAM) or the like as a work area. Note that the control unit 430 may be implemented by an integrated circuit such as an Application Specific Integrated Circuit (ASIC) or a Field Programmable Gate Array (FPGA). The CPU, the MPU, the GPU, the ASIC, and the FPGA can all be regarded as controllers.

The control unit 430 includes a notification unit 431 and an application execution unit 432. Each of blocks (the notification unit 431 and the application execution unit 432) constituting the control unit 430 is a functional block indicating a function of the control unit 430. These functional blocks may be software blocks or hardware blocks. For example, each of the functional blocks described above may be one software module implemented by software (including a micro-program), or may be one circuit block on a semiconductor chip (die). Of course, each functional block may be one processor or one integrated circuit. Any method is used for configuring the functional block. Note that the control unit 430 may include functional units different from the functional blocks described above.

### (Notification unit 431)

The notification unit 431 notifies the information processing apparatus 100 of the terminal information. The notification unit 431 collects information regarding the terminal apparatus 40 and generates the terminal information. The notification unit 431 notifies the information processing apparatus 100 of the terminal information via the notification NS 231 (see FIG. 3).

### (Application execution unit 432)

The application execution unit 432 executes processing by an application program stored in the storage unit 420. The application execution unit 432 executes, for example, processing by an application program regarding a service to be provided by the third party system 10. As a result, the terminal apparatus 40 functions as the third party client 500 and receives provision of the service from the third party system 10.

Note that, here, the terminal apparatus 40 that performs wireless communication with the base station 300 executes a predetermined application to function as the third party client 500 that receives a service from the third party system 10, but the embodiment is not limited thereto.

For example, the communication system 1 can include an external device (for example, a camera or the like. not illustrated) that executes a predetermined application separately from the terminal apparatus 40 that performs wireless communication with the base station 300. The external device is connected to the base station 300 by using a communication function of the terminal apparatus 40 by, for example, a tethering technology. In this case, the external device can have functions of the storage unit 420 and the control unit 430 described above.

### <<3. Communication processing>>

### <3.1. Outline of communication processing>

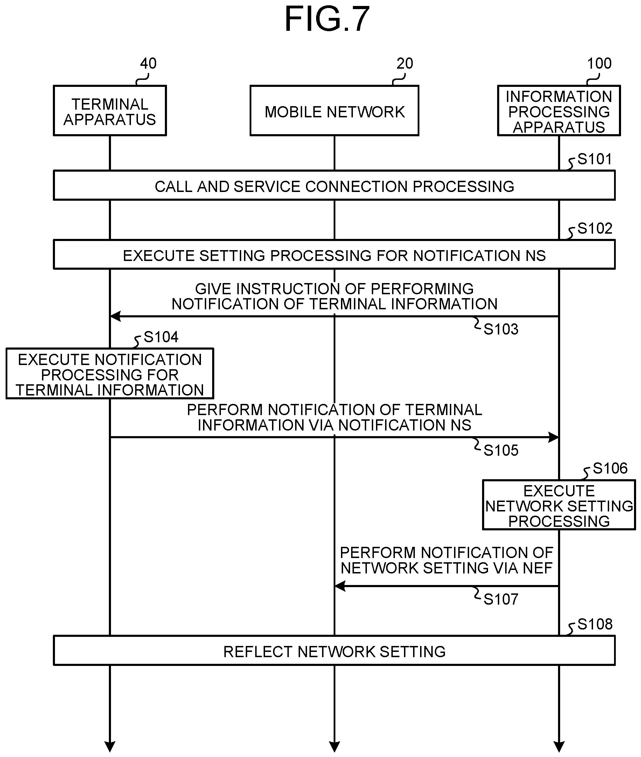

FIG. 7 is a sequence diagram illustrating an example of a flow of the communication processing according to the embodiment of the present disclosure. The communication processing illustrated in FIG. 7 is executed in a case where the information processing apparatus 100 and the terminal apparatus 40 start communication. Note that, here, it is assumed that the third party system 10 provides a quality guaranteed service that guarantees service quality to the terminal apparatus 40.

As illustrated in FIG. 7, the information processing apparatus 100, the mobile network 20, and the terminal apparatus 40 execute call and service connection processing (step S101). As a result, a network slice for providing a service (hereinafter, also referred to as a service NS) is set between the information processing apparatus 100 and the terminal apparatus 40, and the service is provided to the terminal apparatus 40 via the service NS.

Furthermore, the information processing apparatus 100, the mobile network 20, and the terminal apparatus 40 execute setting processing for the notification NS 231 (step S102). As a result, the notification NS 231 for performing notification of the terminal information is set between the information processing apparatus 100 and the terminal apparatus 40.

The information processing apparatus 100 instructs the terminal apparatus 40 to perform notification of the terminal information (step S103). The terminal apparatus 40 that has received the notification executes notification processing for the terminal information (step S104). The terminal apparatus 40 notifies the information processing apparatus 100 of the terminal information via the notification NS 231 (step S105).

The information processing apparatus 100 executes network setting processing on the basis of the terminal information (step S106). The information processing apparatus 100 notifies the mobile network 20 of the network settings via the NEF 245 (step S107). Thereafter, communication reflecting the network settings is executed between the information processing apparatus 100, the mobile network 20, and the terminal apparatus 40 (step S108) .

Note that the communication system 1 can repeatedly execute the processing of steps S103 to S108 until provision of the service by the third party system 10 is ended.

### <3.2. Call and service connection processing>

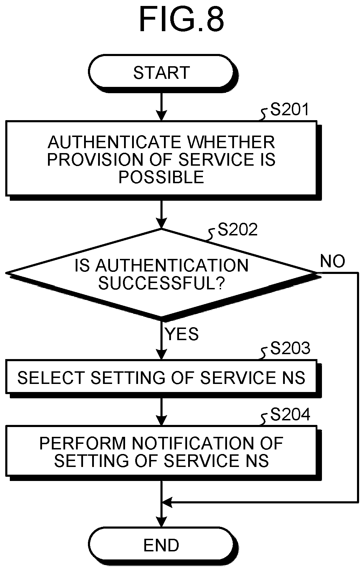

FIG. 8 is a flowchart illustrating an example of a flow of the call and service connection processing according to the embodiment of the present disclosure. The call and service connection processing illustrated in FIG. 8 is executed by the information processing apparatus 100, for example, in a case where the terminal apparatus 40 connects to the mobile network 20 and receives provision of the service from the information processing apparatus 100. The information processing apparatus 100 executes, for example, the call and service connection processing illustrated in FIG. 8 in response to a request from the terminal apparatus 40.

As illustrated in FIG. 8, the information processing apparatus 100 authenticates whether or not provision of the service is possible to the user (or the terminal apparatus 40 used by the user) (step S201). For example, the information processing apparatus 100 authenticates whether or not the service can be provided to the user on the basis of user information held in the user information DB 121 and service information held in the service information DB 122.

Next, the information processing apparatus 100 determines whether or not the authentication is successful (step S202). In a case where the authentication has failed (step S202; No), the information processing apparatus 100 ends the call and service connection processing.

On the other hand, in a case where the authentication is successful (step S202; Yes), the information processing apparatus 100 selects a setting of the service NS at the time of service provision (step S203) .

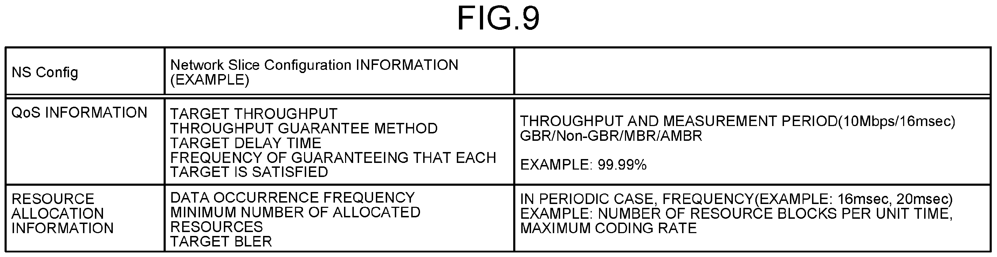

FIG. 9 is a table for explaining an example of the setting of the service NS according to the embodiment of the present disclosure. As illustrated in FIG. 9, the information processing apparatus 100 sets information regarding the QoS (QoS information) and information regarding resource allocation (resource allocation information) as the setting of the service NS (NS Config).

The QoS information can include information, for example, information regarding a target throughput, information regarding a throughput guarantee method, a target delay time, a frequency of guaranteeing that each target is satisfied (hereinafter, also referred to as a commitment frequency), and the like. The QoS information can include, as the target throughput, information regarding a specific throughput and a period at which the throughput is measured. Furthermore, the information processing apparatus 100 selects, for example, a Guaranteed bit rate (GBR)/non-GBR, a Maximum Bit Rate (MBR), or an Aggregate Maximum Bit Rate (AMBR) as the throughput guarantee method. Furthermore, the information processing apparatus 100 selects, for example, a value such as 99.99% as the commitment frequency.

The resource allocation information can include, for example, information regarding a data occurrence frequency, a minimum number of allocated resources, and a target Block Error Rate (BLER). For example, in a case of data that periodically occurs, the information regarding the data occurrence frequency can include information regarding an occurrence period and a frequency of the data. Furthermore, the information regarding the minimum number of allocated resources can include, for example, information regarding the number of resource blocks per unit time and a maximum coding rate.

Returning to FIG. 8, the information processing apparatus 100 notifies the mobile network 20 of the selected setting of the service NS via the NEF 245 (step S204) .

As a result, the information processing apparatus 100 can set the service NS according to quality of the service to be provided to the user.

### <3.3. Setting processing for notification NS>

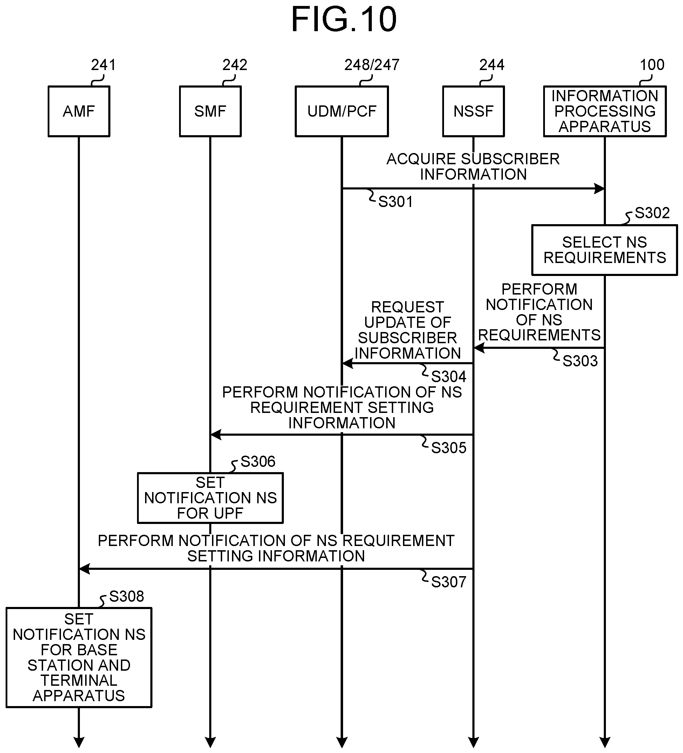

FIG. 10 is a sequence diagram illustrating an example of a flow of the setting processing according to the embodiment of the present disclosure. The setting processing illustrated in FIG. 10 is executed in a case where the communication system 1 sets the notification NS 231.

As illustrated in FIG. 10, the information processing apparatus 100 acquires subscriber information from the UDM 248 and/or the PCF 247 (step S301) .

The information processing apparatus 100 selects NS requirements required for the notification NS 231 (step S302). The NS requirements are configurations set in the information processing apparatus 100 for each corresponding service in advance. The information processing apparatus 100 selects NS requirements for the notification NS 231 to be set according to a type of the service to be provided to the user.

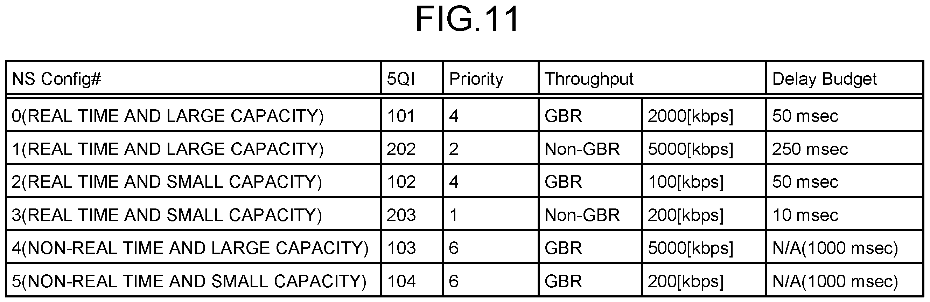

Here, FIG. 11 is a table for explaining an example of the NS requirements according to the embodiment of the present disclosure. FIG. 11 illustrates an example of the NS requirements for each NS setting number (NS Config#) .

In the example of FIG. 11, in a case where the quality required for the service is real time and large capacity, an NS requirement with the NS setting number of "0" or "1" is selected. Examples of the NS requirements include items such as "5QI", "Default Priority Level" (described as "Priority" in FIG. 11), "Throughput", and "Packet Delay Budget" (described as "Delay Budget" in FIG. 11). For example, in a case where the NS setting number is "0", the information processing apparatus 100 selects "101" as the "5QI" and "4" as the "Default Priority Level". Moreover, the information processing apparatus 100 selects "GBR" and "2000 kbps" as "Throughput", and selects "50 msec" as "Packet Delay Budget".

Note that "5QI" illustrated in FIG. 11 is a value defined for the notification NS 231 according to the present embodiment. Furthermore, in the example of FIG. 11, the "Default Priority Level" is defined by values from 1 to 9, and the smaller the number, the higher the priority. That is, in a case where the "Default Priority Level" is "1", the priority is the highest, and in a case where the "Default Priority Level" is "9", the priority is the lowest.

As the real-time property required for the service is higher, detailed terminal information is required, and notification of terminal information is required frequently, and notification of terminal information having a large amount of information is required. As described above, in a case where frequent notification or a large amount of information is required, as illustrated in FIG. 11, a request for GBR or Delary Budet for the notification NS 231 increases.

Returning to FIG. 10, the information processing apparatus 100 notifies the NSSF 244 of the NS requirements selected in step S302 (step S303) . The NSSF 244 requests the UDM 248 and/or the PCF 247 to update the subscriber information according to the acquired NS requirements (step S304). The UDM 248 and/or the PCF 247 update the subscriber information in response to the request.

Furthermore, the NSSF 244 generates NS requirement setting information for setting the notification NS 231 according to the NS requirements, and notifies the SMF 242 of the NS requirement setting information (step S305). The SMF 242 sets the notification NS 231 for the UPF 221 according to the NS requirement setting information (step S306).

The NSSF 244 notifies the AMF 241 of the NS requirement setting information (step S307). The AMF 241 sets the notification NS 231 for the base station 300 and the terminal apparatus 40 according to the NS requirement setting information (step S308).

As described above, in a case where the guarantee of the service quality is required at the time of call connection and/or service connection (start), the information processing apparatus 100 requests the mobile network 20 to set the notification NS 231 via the NEF 245.

Note that, in a case where the subscriber information does not have to be acquired from the UDM 248 and/or the PCF 247, such as a case where the information processing apparatus 100 has already acquired the subscriber information, the information processing apparatus 100 can omit the processing of step S301. Furthermore, in a case where updating the subscriber information is unnecessary, updating the subscriber information by the UDM 248 and/or the PCF 247 may be omitted. In this case, the NSSF 244 can omit the processing of step S304.

Furthermore, here, the information processing apparatus 100 sets the service NS and then sets the notification NS 231, but the embodiment is not limited thereto. The information processing apparatus 100 may set the notification NS 231 and then set the service NS, or may set the notification NS 231 and the service NS simultaneously.

Furthermore, here, the information processing apparatus 100 sets the notification NS 231 separately from the service NS, but the embodiment is not limited thereto. For example, the communication system 1 may share the notification NS 231 and a slice of a normal U-Plane (for example, the service NS). In this case, in a case where setting is performed of the slice of the normal U-Plane (for example, setting regarding the QoS), it is desirable that the information processing apparatus 100 consider the NS requirements (see FIG. 11) for the notification NS 231 set for each service type.

### <3.4. Notification processing for terminal information>

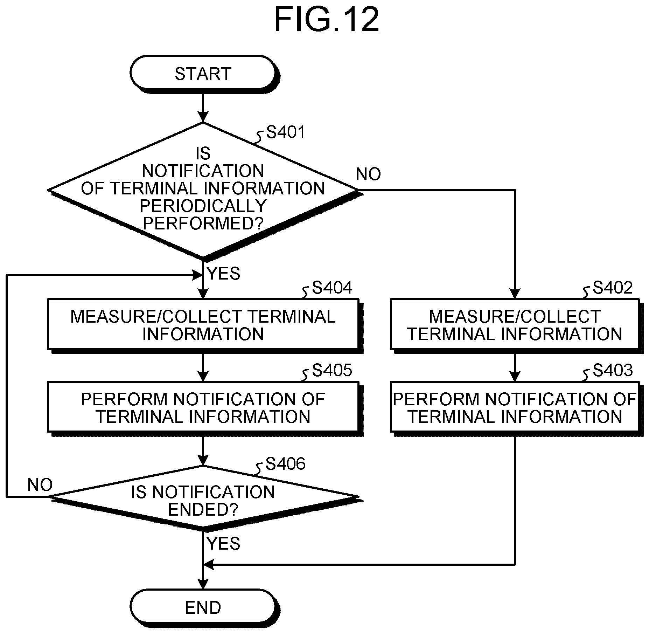

FIG. 12 is a flowchart illustrating an example of a flow of the notification processing according to the embodiment of the present disclosure. The notification processing illustrated in FIG. 12 is executed by the terminal apparatus 40, for example. The terminal apparatus 40 executes the notification processing, for example, upon receiving an instruction of notification of the terminal information (an example of acquisition information. hereinafter, also referred to as a notification instruction) from the information processing apparatus 100.

The terminal apparatus 40 determines whether or not to periodically perform notification of the terminal information on the basis of the notification instruction received from the information processing apparatus 100 (step S401).

In a case where the notification of the terminal information is not periodically performed (step S401; No), that is, in a case where the notification instruction from the information processing apparatus 100 is for a one-time report, the terminal apparatus 40 measures and/or collects the terminal information (step S402). The terminal apparatus 40 measures information related to a wireless environment in the wireless link with the base station 300, and the like. Furthermore, the terminal apparatus 40 collects information regarding the terminal apparatus itself, information related to the third party client 500, and the like. Note that the terminal apparatus 40 measures and/or collects the terminal information on the basis of measurement information included in the notification instruction.

The terminal apparatus 40 notifies the information processing apparatus 100 of the measured and/or collected terminal information via the notification NS 231 (step S403), and ends the processing.

In a case where the notification of the terminal information is periodically performed (step S401; Yes), that is, in a case where the notification instruction from the information processing apparatus 100 is for a periodic report, the terminal apparatus 40 measures and/or collects the terminal information (step S404). The terminal apparatus 40 measures and/or collects the terminal information on the basis of measurement information included in the notification instruction. The terminal apparatus 40 notifies the information processing apparatus 100 of the measured and/or collected terminal information via the notification NS 231 (step S405).

Next, the terminal apparatus 40 determines whether or not to end the notification of the terminal information (step S406). For example, in a case where the provision of the service from the third party system 10 is ended, the terminal apparatus 40 determines to end the notification of the terminal information. Alternatively, the terminal apparatus 40 may determine whether or not to end the notification of the terminal information on the basis of an instruction from the information processing apparatus 100.

In a case where the notification of the terminal information is ended (step S406; Yes), the terminal apparatus 40 ends the notification processing. On the other hand, in a case where the notification of the terminal information is not ended (step S406; No), that is, in a case where the notification of the terminal information is continued, the terminal apparatus 40 returns to step S404 and performs the notification of the terminal information at a timing based on a notification period. Here, the notification period is a period designated by period information included in the notification instruction.

As described above, the terminal apparatus 40 generates the terminal information on the basis of the notification instruction received from the information processing apparatus 100 after the notification NS 231 is set. The terminal apparatus 40 notifies the information processing apparatus 100 of the generated terminal information via the notification NS 231. The information processing apparatus 100 transmits, for example, the notification instruction including the measurement information and the period information to the terminal apparatus 40. The information processing apparatus 100 transmits the notification instruction to the terminal apparatus 40 via the notification NS 231, for example.

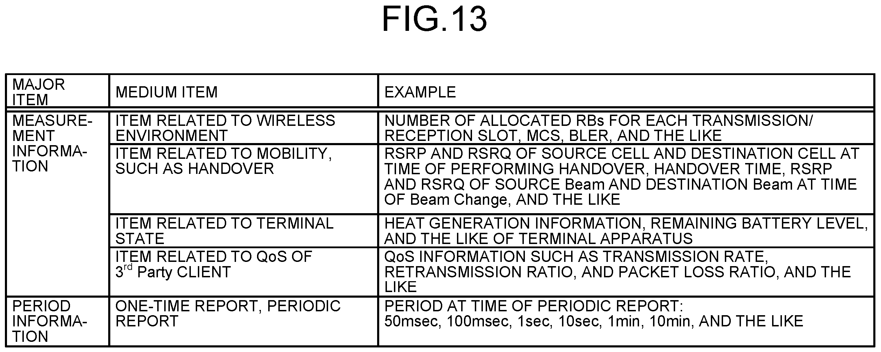

FIG. 13 is a table illustrating an example of the notification instruction according to the embodiment of the present disclosure. As described above, the notification instruction includes the measurement information and the period information. The measurement information is information (an example of type information) instructing a type of the terminal information to be measured and/or collected, that is, terminal information of which notification is to be performed, to the terminal apparatus 40. The period information is information (an example of timing information) instructing a timing of notifying the terminal apparatus 40 of the terminal information.

As illustrated in FIG. 13, the measurement information can include items related to a wireless environment between the terminal apparatus 40 and the base station 300 (an example of communication information) and items related to mobility such as handover (an example of communication information). Furthermore, the measurement information can include items related to a terminal state (an example of state information), items related to the QoS of the third party client 500 (an example of service information), and the like.

The items related to the wireless environment can include, for example, information such as the number of allocated resource blocks (RBs) for each transmission/reception slot, RSRP, SINR, transmission power, Modulation and Coding Scheme (MCS), and the BLER.

The items related to mobility can include, for example, information regarding a handover source cell and a handover destination cell at the time of performing handover (for example, Reference Signal Received Power (RSRP), Reference Signal Received Quality (RSRQ), and the like). The items related to mobility can include, for example, information regarding a handover time. In a case where the terminal apparatus 40 performs wireless communication using beamforming with the base station 300, the items related to mobility can include information regarding a beam before change (source beam) and a beam after change (destination beam) in a case where the beam is changed (for example, RSRP, RSRQ, and the like).

The items related to the terminal state can include information regarding heat generation, a remaining battery level, and the like of the terminal apparatus 40.

The items related to the QoS information on the third party client 500 can include the QoS information, for example, a transmission rate, a retransmission ratio, and a packet loss ratio, and the like.

The measurement information indicated here is an example, and the measurement information designated by the information processing apparatus 100 is not limited thereto. The information processing apparatus 100 can select a detailed item of the measurement information according to, for example, a data capacity set in the notification NS 231. Alternatively, the information processing apparatus 100 may select a setting of the notification NS 231 according to the measurement information to be reported by the terminal apparatus 40.

The periodic information indicated in FIG. 13 can include information indicating whether the report is a one-time report in which notification of the terminal information is performed once or a periodic report in which notification of the terminal information is performed periodically and repeatedly. In a case of the periodic report, the periodic information can include information regarding a period (notification period) of performing notification of the terminal information.

In a case where the terminal information is periodically reported, the terminal apparatus 40 collects and/or measures all the measurement information until next terminal information is reported, for example. At a timing when the terminal information is reported next, the terminal apparatus 40 notifies the information processing apparatus 100 of the measurement information collected and/or measured in a period until then as the terminal information through the notification NS 231.

Alternatively, the terminal apparatus 40 can periodically collect and/or measure the terminal information. In this case, a period (hereinafter, also referred to as a measurement period) at which the terminal apparatus 40 collects and/or measures the terminal information, and the notification period at which notification of the terminal information is performed may be the same as each other or different from each other. Note that the measurement period can be designated by the information processing apparatus 100 by using, for example, the notification instruction.

As described above, the terminal apparatus 40 reports the terminal information to the information processing apparatus 100 through the notification NS 231. As a result, the information processing apparatus 100 can acquire in real time, from the terminal apparatus 40, detailed information regarding communication between the terminal apparatus 40 and the base station 300, such as radio wave propagation information, and information regarding the terminal apparatus 40.

Note that the information processing apparatus 100 can acquire information (for example, radio wave propagation information, a traffic status, and the like) collected and analyzed in the mobile network 20 in real time via the NEF 245 in addition to the terminal information from the terminal apparatus 40. Furthermore, the information processing apparatus 100 can acquire information regarding a service to be provided to the terminal apparatus 40 and the like from the third party system 10 in real time.

The information processing apparatus 100 stores the terminal information acquired from the terminal apparatus 40 through the notification NS 231, the information acquired from the mobile network 20 through the NEF 245, and the information acquired from the third party system 10 in the communication status DB 123 (see FIG. 5).

### <3.5. Network setting processing>

The information processing apparatus 100 that has acquired the terminal information from the terminal apparatus 40 analyzes a communication status with the terminal apparatus 40 on the basis of the terminal information, and predicts a trend of a future communication status. For example, the information processing apparatus 100 predicts presence or absence of a change in the communication status and the trend of the future communication status from viewpoints of E2E, wireless, and transport on the basis of the terminal information and the information acquired from the mobile network 20 and the third party system 10. The information processing apparatus 100 analyzes and predicts the communication status on the basis of, for example, the terminal information stored in the communication status DB 123 and the information acquired from the mobile network 20 and the third party system 10.

In a case where the quality of communication with the terminal apparatus 40 is not suitable for the QoS information currently set in the service NS as results of analysis and prediction, the information processing apparatus 100 selects a suitable setting. The information processing apparatus 100 notifies the mobile network 20 of the selected setting (NS Config) via the NEF 245. As a result, a new setting is reflected in the service NS.

As described above, the information processing apparatus 100 analyzes and predicts the communication status by using the terminal information acquired from the terminal apparatus 40. The information processing apparatus 100 controls the mobile network 20 on the basis of the results of analysis and prediction. Note that the information processing apparatus 100 may control the third party system 10 in addition to the mobile network 20 on the basis of the results of analysis and prediction. For example, the information processing apparatus 100 can control the quality of the service to be provided to the terminal apparatus 40 by the third party system 10 according to the results of analysis and prediction.

As a result, the third party system 10 can acquire detailed information regarding the communication status in real time even when not having the core network 200 and the base station 300 like the MNO. The third party system 10 analyzes and predicts the acquired information, and feeds back the results to the mobile network 20 via the NEF 245, thereby being able to perform control to maintain the communication quality with the terminal apparatus 40.

As described above, in the conventional communication system 1A, the third party system 10 cannot grasp detailed information regarding the communication status such as a radio wave propagation status from the outside of the mobile network 20, and it has not been possible to determine deterioration of the communication status due to the wireless link.

In the communication system 1 according to the present embodiment, the information processing apparatus 100 acquires, from the terminal apparatus 40, a status of the wireless link, for example, the number of used wireless resources (the number of RBs), allocation frequency, the coding rate, the BLER, radio wave intensity and quality, used beam information, and the like. The information processing apparatus 100 performs control on the core network 200 and/or the base station 300 from the outside of the mobile network 20 by using the acquired information. As a result, the information processing apparatus 100 according to the present embodiment can maintain the quality of communication with the terminal apparatus 40 at a desired quality.

Here, examples of the control (network setting) performed by the information processing apparatus 100 on the core network 200 and/or the base station 300 include control of the priority of the terminal apparatus 40. Furthermore, examples of the control include control of an amount and frequency of allocation of wireless resources, and update of the target BLER and the coding rate. The information processing apparatus 100 performs the above-described control on the core network 200 and/or the base station 300 in order to maintain the communication quality of the terminal apparatus 40 on the basis of the information on the terminal apparatus 40 and the cell for which analysis and prediction of the communication status have been performed. As a result, the information processing apparatus 100 provides a more optimal communication path for the terminal apparatus 40.

As described above, according to the proposed technology of the present disclosure, it becomes possible for a service provider (for example, the third party system 10) using the mobile network 20 to collect information regarding the communication status, in particular, the radio wave propagation environment in real time. In a case where the service provider provides a service on the mobile network 20, variation in the radio wave propagation environment is a first factor that destabilizes an environment in which the service is provided. However, in the conventional technology, it has been difficult for the service provider to acquire the information regarding the radio wave propagation environment from the mobile network 20.

By using the proposed technology of the present disclosure, the service provider can collect in real time the information regarding the radio wave propagation environment that is an unstable element of the service. By utilizing this information, it becomes possible for the service provider to control the wireless resources, the modulation scheme, the coding rate, and the like in accordance with the radio wave propagation environment that changes from moment to moment. As a result, it becomes possible for the service provider to control the mobile network 20 and the service quality, and to provide a stable service to an end user (for example, a user who uses the terminal apparatus 40). Note that, here, the stable service means a service that is not caused by the radio wave environment and can achieve a desired throughput, delay time, packet loss ratio, and the like.

### <<4. Application example>>

### <4.1. Application example to cloud gaming>

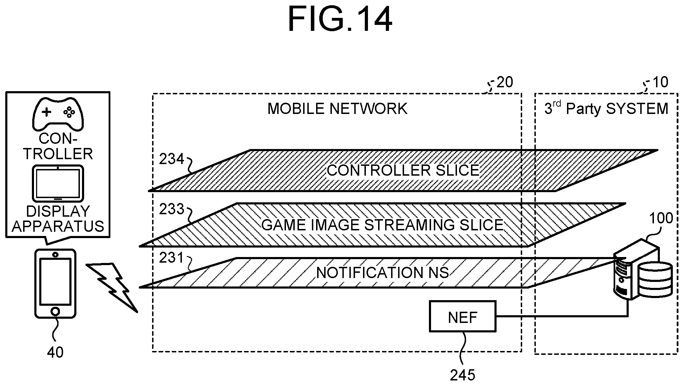

As a use case to which the communication system 1 according to the above-described embodiment can be applied, cloud gaming can be mentioned, for example. FIG. 14 is a diagram for explaining an application example of the communication system 1 according to the embodiment of the present disclosure. In this case, the third party system 10 is assumed to be a cloud gaming system.

The terminal apparatus 40 receives provision of a game service from the third party system 10. In this case, the terminal apparatus 40 functions as a controller that receives an operation for a game from the user, and also functions as a display apparatus that displays a game image.

The terminal apparatus 40 transmits operation information for the game to the third party system 10 on an uplink (UL). Furthermore, the terminal apparatus 40 receives the game image from the third party system 10 on the downlink (DL).

For that reason, in the cloud gaming, traffic requests respectively required for the UL and the DL are different from each other. Thus, the information processing apparatus 100 of the third party system 10 sets different network slices for the UL and the DL, respectively.

In the example of FIG. 14, the information processing apparatus 100 sets a controller slice 234 in order for the terminal apparatus 40 to transmit the operation information for the game. The information processing apparatus 100 sets a game image streaming slice 233 in order for the terminal apparatus 40 to receive the game image. The information processing apparatus 100 sets the notification NS 231 in order to guarantee the quality of the cloud gaming. The information processing apparatus 100 sets these network slices and provides the game service. The terminal apparatus 40 performs the game by using these network slices.

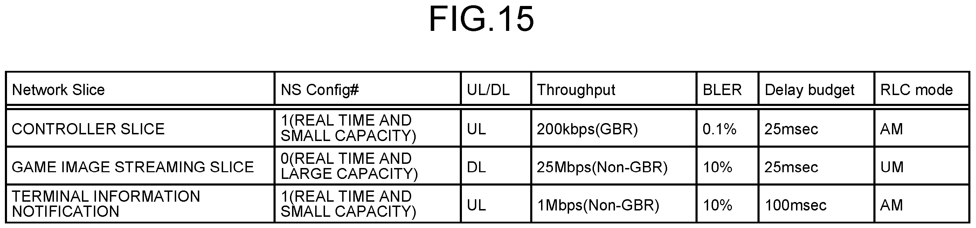

FIG. 15 is a table for explaining a setting example of the network slices according to the application example of the present disclosure. FIG. 15 illustrates an example of a default network slice setting set by the information processing apparatus 100 at the start of the game.

As illustrated in FIG. 15, the information processing apparatus 100 sets parameters of the base station 300, the core network 200, and the QoS for each network slice at the start of the game. In the example of FIG. 15, the information processing apparatus 100 sets, for each network slice, parameters such as the NS setting number (NS Config#), information indicating either the UL or the DL (UL/DL), the throughput, the BLER, the Packet Delay Budget (described as "Delay Budget" in FIG. 15), and RLC Mode.

For example, the operation information for the game is control information desired to be reliably transmitted although the communication rate is low. For that reason, the information processing apparatus 100 sets the controller slice 234 so that the operation information is transmitted at a low error rate and in Acknowledge Mode (AM of FIG. 15).

For example, the game image is information desired to be transmitted at a high speed and a low delay, but even if image data delayed by retransmission is discarded, influence on the game itself is small. For that reason, the information processing apparatus 100 sets the game image streaming slice 233 so that the game image is transmitted in Unacknowledge Mode (UM of FIG. 15).

After the game is started, the information processing apparatus 100 controls the mobile network 20 on the basis of the terminal information acquired from the terminal apparatus 40 via the notification NS 231 in consideration of a difference in the communication quality required for each of the operation information for the game and the game image.

In a case where the terminal apparatus 40 receives the provision of the game service, even in a case where the user statically executes the game, a status of radio wave propagation changes at any time by, for example, the user changing the way of holding the terminal apparatus 40.

The MNO can acquire radio wave propagation information from the core network 200 or the base station 300. However, it is difficult for the third party system 10 to acquire detailed information such as the radio wave propagation information and QoS information via the mobile network 20.

Thus, in the application example of the present disclosure, the terminal apparatus 40 acquires the terminal information including the radio wave propagation information, QoS information, and the like as needed, and notifies the information processing apparatus 100 of the terminal information. The terminal apparatus 40 can notify the information processing apparatus 100 of the terminal information at a notification period designated by the information processing apparatus 100.

The information processing apparatus 100 analyzes and predicts the radio wave propagation information, QoS information, and the like, on the basis of the acquired terminal information. The information processing apparatus 100 sets the QoS through the NEF 245 (see FIG. 14) so as to allocate optimal mobile network resources to the controller network slice and the game image streaming slice 233 according to results of analysis and prediction.

For example, it is assumed that the radio wave propagation environment deteriorates and transmission errors of the operation information on the UL increase. In this case, the information processing apparatus 100 controls the mobile network 20 to decrease the coding rate by degrading the modulation scheme (MCS) and increasing the number of allocated RBs. Alternatively, the information processing apparatus 100 controls the mobile network 20 to set Transmission Time Interval (TTI) Bunding to Enable, increase retransmission frequency, and decrease the BLER after HARQ. As described above, the information processing apparatus 100 controls the mobile network 20 so that the operation information is stably transmitted even if the radio wave propagation environment deteriorates.

For example, it is assumed that the radio wave propagation environment deteriorates and the packet loss ratio of the game image on the DL increases. In this case, the information processing apparatus 100 controls the mobile network 20 to increase the number of allocated RBs and improve Coding Rate. Alternatively, in a case where the current packet loss ratio is allowed, the information processing apparatus 100 controls the mobile network 20 to lower the number of times of retransmission and a Discard threshold, thereby preventing an increase in delay time due to excess of retransmission.

For example, it is assumed that an amount of heat generation of the terminal apparatus 40 increases. In this case, the information processing apparatus 100 controls the mobile network 20 to switch to a communication method in which the transmission power of the terminal apparatus 40 decreases. For example, the information processing apparatus 100 notifies the mobile network 20 to change how the throughput increases or decreases, a terminal group, and the like. Alternatively, the information processing apparatus 100 may notify the third party system 10 to lower the communication rate at an application level.

For example, it is assumed that the terminal apparatus 40 that has been stopped starts to move. In this case, the information processing apparatus 100 controls the mobile network 20 to change the frequency band used for communication to a lower frequency band. The lower the frequency band, the wider the coverage, and the radio wave is likely to go around. For that reason, the information processing apparatus 100 changes the frequency band used for communication to a lower frequency band, whereby stable communication can be maintained even if the terminal apparatus 40 moves.

For example, it is assumed that the moving terminal apparatus 40 stops. In this case, the information processing apparatus 100 controls the mobile network 20 to change the frequency band used for communication to a higher frequency band. The higher the frequency band, the larger the communication capacity. For that reason, the information processing apparatus 100 changes the frequency band used for communication to a higher frequency band, whereby larger capacity communication can be achieved.

Note that, here, the terminal apparatus 40 has the function of the controller and the function of the display apparatus, but the embodiment is not limited thereto. For example, the terminal apparatus 40 may be connected to an external controller (not illustrated) or an external display apparatus (not illustrated) to receive the provision of the game service. In this case, the terminal apparatus 40 transmits the operation information acquired from the external controller to the third party system 10 via the controller slice 234. Furthermore, the terminal apparatus 40 displays the game image received from the third party system 10 via the game image streaming slice 233 on the external display apparatus.

In a case where the user receives the provision of the game service by using the terminal apparatus 40 and the external device as described above, the user may use the terminal apparatus in a fixed state without moving the terminal apparatus, or may use the terminal apparatus 40 installed in a predetermined place. In a case where the terminal apparatus 40 is fixed or installed in a predetermined place, the information processing apparatus 100 controls the mobile network 20 not to perform handover of the terminal apparatus 40.

For example, handover may be performed even though the terminal apparatus 40 has not moved, such as in a case where the terminal apparatus 40 is located at a boundary of a cell. In this case, handover frequently occurs, and the communication status of the terminal apparatus 40 may deteriorate.

Thus, in a case where the terminal apparatus 40 is fixed or installed in a predetermined place, the information processing apparatus 100 prevents handover of the terminal apparatus 40 from being performed. As a result, the information processing apparatus 100 can suppress unnecessary handover of the terminal apparatus 40.

As described above, the information processing apparatus 100 detects a change in the communication status of the terminal apparatus 40 on the basis of the terminal information such as the radio wave propagation information acquired from the terminal apparatus 40. The information processing apparatus 100 performs, on the mobile network 20 and/or the third party system 10, control according to the change in the communication status, such as control to correct a deterioration in the communication status in a case where the deterioration is detected. As a result, the information processing apparatus 100 can achieve stable communication and achieve a high user experience.

### <4.2. Application example to Virtual Reality (VR) streaming>

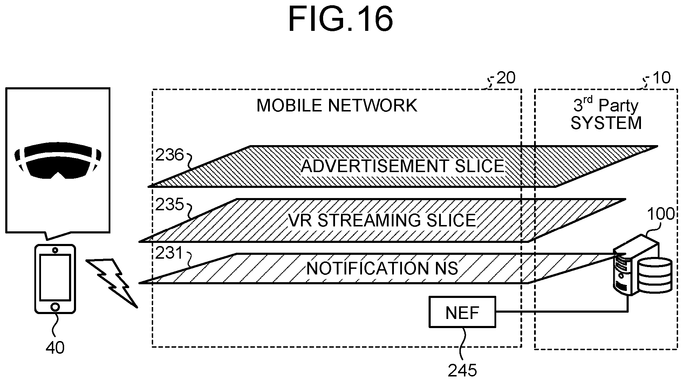

As another use case to which the communication system 1 according to the above-described embodiment can be applied, VR streaming can be mentioned, for example. FIG. 16 is a diagram for explaining another application example of the communication system 1 according to the embodiment of the present disclosure. In this case, the third party system 10 is assumed to be a VR streaming system.

The terminal apparatus 40 receives provision of, for example, an 8K VR streaming service from the third party system 10. For example, it is assumed that the user wears, on the head, a head mounted display to which the terminal apparatus 40 is attached, and receives the 8K VR streaming service. In this case, the terminal apparatus 40 functions as a display apparatus of the head mounted display.

Furthermore, in the present application example, it is assumed that the user can receive the 8K VR streaming service for free under the condition of viewing an advertisement.

In this case, the information processing apparatus 100 of the third party system 10 sets an advertisement slice 236 for distributing an advertisement as illustrated in FIG. 16. The information processing apparatus 100 sets a VR streaming slice 235 for the terminal apparatus 40 to receive an 8K VR streaming image. The information processing apparatus 100 sets the notification NS 231 in order to guarantee the quality of 8K VR streaming. The information processing apparatus 100 sets these network slices and provides the game service. The terminal apparatus 40 performs the game by using these network slices.

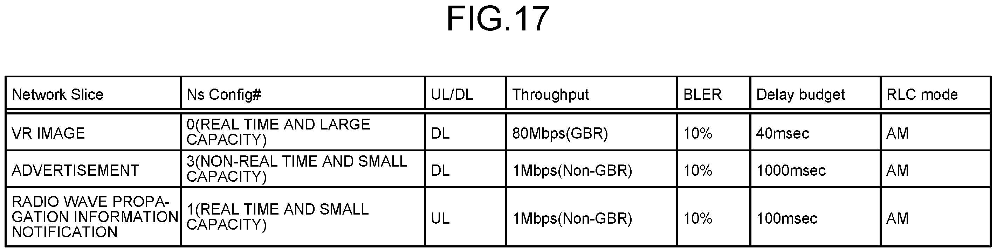

FIG. 17 is a table for explaining a setting example of the network slices according to the other application example of the present disclosure. FIG. 17 illustrates an example of a default network slice setting set by the information processing apparatus 100 at the start of the streaming.

As illustrated in FIG. 17, the information processing apparatus 100 sets parameters of the base station 300, the core network 200, and the QoS for each network slice at the start of the streaming. In the example of FIG. 17, the information processing apparatus 100 sets, for each network slice, parameters such as the NS setting number (NS Config#), information indicating either the UL or the DL (UL/DL), the throughput, the BLER, the Packet Delay Budget (described as "Delay Budget" in FIG. 17), and RLC Mode.

For example, the real-time property and largecapacity communication are required for communication of the 8K VR streaming image. On the other hand, the real-time property is not required for communication of the advertisement (non-real time), and communication capacity may be small.

Note that, since the 8K VR streaming image has a large capacity, the communication capacity may be tight. In this case, the information processing apparatus 100 may have a function of performing Call Admission Control (CAC), that is, a function of rejecting addition of a user to the mobile network 20. Note that, normally, in the mobile network 20, the CAC is performed by Radio Resource Control (RRC), the UDM 248, or the PCF 247. On the other hand, as in the present application example, the information processing apparatus 100 performs the CAC, whereby the third party system 10 can determine the participation qualification of the user in the mobile network 20.

For example, the information processing apparatus 100 sets the advertisement slice 236, the VR streaming slice 235, and the notification NS 231 according to the setting example of the network slice illustrated in FIG. 17.

Thereafter, when VR streaming is started, the information processing apparatus 100 controls the mobile network 20 on the basis of the terminal information acquired from the terminal apparatus 40 via the notification NS 231.

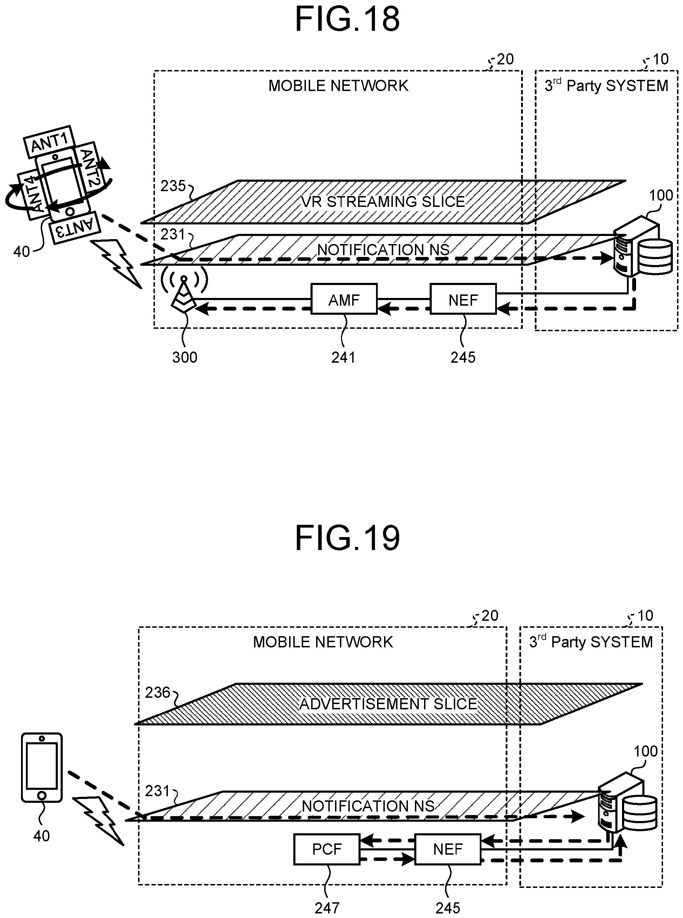

FIG. 18 is a diagram for explaining an example of communication processing according to another application example of the present disclosure.

In a case where the user receives the provision of the 8K VR streaming service, even in a case where the user does not move, the user moves the head and views images in directions in 360°. For that reason, the terminal apparatus 40 also moves in conjunction with the movement of the head of the user. As a result, a reception status of the antenna mounted on the terminal apparatus 40 changes at any time.

Note that, in the example of FIG. 18, four antennas (ANTI to ANT4) are mounted around the terminal apparatus 40. It is assumed that ANT1 to ANT4 are MIMO antennas each having four antenna elements, and are antennas for DL communication.

In a case where the terminal apparatus 40 is equipped with a plurality of antennas as described above, the reception status of each antenna changes at any time according to the movement of the user.

Moreover, in a case where the user moves the head while moving and views images in directions in 360°, the change in the reception status of the antenna mounted on the terminal apparatus 40 becomes more complicated.

Such a reception status of the antenna is held by the terminal apparatus 40, but is not held by the mobile network 20. For that reason, it is difficult for the information processing apparatus 100 to acquire the reception status of the antenna of the terminal apparatus 40 from the mobile network 20.

Thus, in the present application example, the terminal apparatus 40 notifies the information processing apparatus 100 of the terminal information including the reception status of the antenna. The information processing apparatus 100 controls the mobile network 20 on the basis of the reception status of the antenna in addition to the radio wave propagation information, the QoS information, and the like.

For example, the information processing apparatus 100 analyzes and predicts use patterns of ANT1 to ANT4 on the basis of the terminal information. The information processing apparatus 100 performs scheduling of ANT1 to ANT4, for example, by selecting or calculating a codebook on the basis of results of analysis and prediction. For example, the information processing apparatus 100 notifies the base station 300 of the selected codebook via the NEF 245 and the AMF 241. The base station 300 communicates with the terminal apparatus 40 according to the codebook of which notification is performed.

As described above, the information processing apparatus 100 performs scheduling of ANT1 to ANT4 according to the information (for example, the reception status of the antenna) regarding ANT1 to ANT4 measured by the terminal apparatus 40. As a result, the information processing apparatus 100 can perform QoS control of 8K VR streaming more effectively than a case where the information processing apparatus 100 performs scheduling of ANT1 to ANT4 according to the information measured by the base station 300.

FIG. 19 is a diagram for explaining another example of the communication processing according to the other application example of the present disclosure. As described above, the third party system 10 according to the present application example provides a VR streaming service to the user for free by presenting an advertisement to the user, such as displaying advertisement information in a VR streaming image.

For example, in a case where the advertisement slice 236 is set, the information processing apparatus 100 can change charging information on the VR streaming slice 235 according to a usage status of the advertisement slice 236.

As illustrated in FIG. 19, the terminal apparatus 40 notifies the information processing apparatus 100 of the user's use information collected from the third party client 500 via the notification NS 231 as the terminal information. The user's use information can include, for example, a size of a VR streaming image that has been downloaded, a use time of the 8K VR streaming service, and the like.

When determining distribution of an advertisement on the basis of the user's use information, the information processing apparatus 100 selects an optimal advertisement and distributes the selected advertisement to the terminal apparatus 40 via the advertisement slice 236. Furthermore, while the advertisement slice 236 is used, the information processing apparatus 100 performs an exchange with the PCF 247 via the NEF 245, and updates the charging information on the VR streaming slice 235.

The information processing apparatus 100 performs notification of the updated charging information on the VR streaming slice 235 and determines a usage amount of the service by the user. For example, the information processing apparatus 100 determines that the usage amount is free while distributing the advertisement to the user.

### <<5. Other Embodiments>>

The above-described embodiments and application examples are examples, and various modifications and applications are possible.

For example, in the above-described embodiment, the third party system 10 provides a service to the user via the mobile network 20, but the embodiment is not limited thereto. For example, the proposed technology of the present disclosure can be applied to, for example, a case where a virtual MNO (VMNO) operator provides a communication service to the user via the mobile network 20.

Recently, in the Ministry of Internal Affairs and Communications, a VMNO that provides a line through a networks slice has been considered, and it has been considered that an MNO provides the mobile network 20 to a third party system (VMNO), whereby the VMNO performs a communication business.

In a case where the VMNO provides the communication service to the user, it is assumed that the VMNO acquires the communication status from the NEF 245 and controls the mobile network 20. In this case, the VMNO cannot directly acquire primary information on the user from the mobile network 20, and cannot perform more advanced QoS control.

Thus, similarly to the above-described embodiment, for example, the VMNO directly acquires the primary information (for example, the terminal information) from the terminal apparatus 40 by using the notification NS 231. As a result, the VMNO can acquire the primary information on the user, and can perform more advanced QoS control using the primary information.

### <<6. Hardware configuration>>

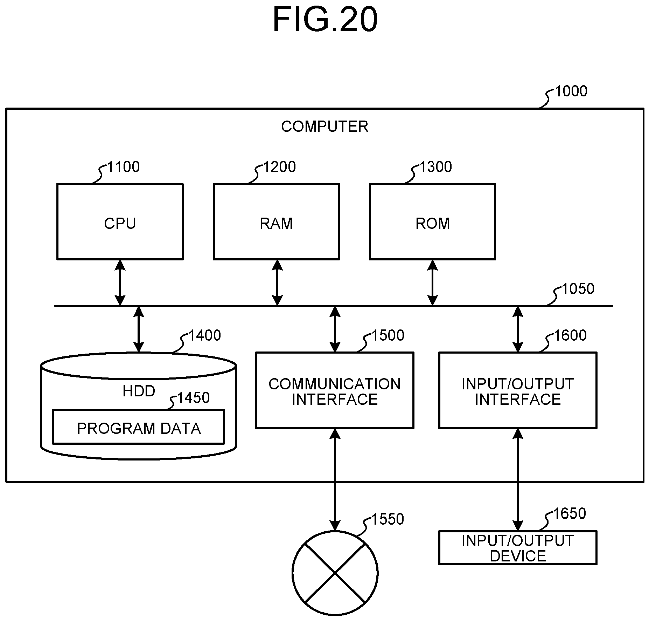

The information processing apparatus 100 according to the present disclosure described above is implemented by a computer 1000 having a configuration as illustrated in FIG. 20, for example. FIG. 20 is a hardware configuration diagram illustrating an example of the computer 1000 that implements functions of the information processing apparatus 100 according to the present disclosure. The computer 1000 includes a CPU 1100, a RAM 1200, a Read Only Memory (ROM) 1300, a Hard Disk Drive (HDD) 1400, a communication interface 1500, and an input/output interface 1600. Units of the computer 1000 are connected to each other by a bus 1050.

The CPU 1100 operates on the basis of a program stored in the ROM 1300 or the HDD 1400, and controls each unit. For example, the CPU 1100 deploys a program stored in the ROM 1300 or the HDD 1400 in the R_AM 1200, and executes processing corresponding to various programs.

The ROM 1300 stores a boot program such as a Basic Input Output System (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records a program according to the present disclosure (for example, a program for executing communication processing), which is an example of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000 to each other. For example, the CPU 1100 receives data from an input device such as a keyboard and a mouse via the input/output interface 1600. Furthermore, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a Digital Versatile Disc (DVD) or a Phase change rewritable Disk (PD), a magneto-optical recording medium such as a Magneto-Optical disk (MO), a tape medium, a magnetic recording medium, a semiconductor memory, or the like.

For example, in a case where the computer 1000 functions as the information processing apparatus 100 according to the embodiment, the CPU 1100 of the computer 1000 implements functions of the control unit 130 and the like by executing a program loaded on the RAM 1200. Furthermore, the HDD 1400 stores the program according to the present disclosure and data in the storage unit 120. Note that, the CPU 1100 reads and executes the program data 1450 from the HDD 1400, but as another example, may acquire these programs from another apparatus via the external network 1550.

### <<7. Conclusion>>

Although the embodiment of the present disclosure has been described above, the technical scope of the present disclosure is not limited to the above-described embodiment as it is, and various modifications can be made without departing from the gist of the present disclosure. Furthermore, components of different embodiments and modifications may be appropriately combined.

For example, a control apparatus that controls the information processing apparatus 100 of the present embodiment may be implemented by a dedicated computer system or may be implemented by a general-purpose computer system.

For example, a program for executing the above-described operation is stored and distributed in a computer-readable recording medium such as an optical disk, a semiconductor memory, a magnetic tape, or a flexible disk. Then, for example, the program is installed in a computer, and the above-described processing is executed to configure the control apparatus. At this time, the control apparatus may be an apparatus outside the information processing apparatus 100 (for example, a personal computer). Furthermore, the control apparatus may be an apparatus inside the information processing apparatus 100 (for example, the control unit 130).

Furthermore, the program may be stored in a disk apparatus included in a server apparatus on a network such as the Internet so that the program can be downloaded to a computer. Furthermore, the above-described functions may be implemented by cooperation of an Operating System (OS) and application software. In this case, a portion other than the OS may be stored in a medium and distributed, or the portion other than the OS may be stored in the server apparatus and downloaded to the computer.

Furthermore, among the pieces of processing described in the above embodiment, all or part of the processing described as being performed automatically can be performed manually, or all or part of the processing described as being performed manually can be performed automatically by a known method. In addition, processing procedures, specific names, and information including various data and parameters described in the document and the drawings can be arbitrarily changed unless otherwise specified. For example, the various types of information illustrated in each figure are not limited to the illustrated information.

Furthermore, each component of each apparatus illustrated is functionally conceptual, and is not necessarily physically configured as illustrated. That is, a specific form of distribution and integration of each apparatus is not limited to the illustrated form, and all or a part thereof can be functionally or physically distributed and integrated in any unit depending on various loads, usage statuses, and the like. Note that this configuration by distribution and integration may be performed dynamically.

Furthermore, the above-described embodiments can be appropriately combined in a region in which processing contents do not contradict each other. Furthermore, the order of steps illustrated in the sequence diagram and the flowchart of the above-described embodiment can be changed as appropriate.

Furthermore, for example, the present embodiment can be implemented as any configuration constituting an apparatus or a system, for example, a processor as a system Large Scale Integration (LSI) or the like, a module using a plurality of processors or the like, a unit using a plurality of modules or the like, a set obtained by further adding other functions to a unit, or the like (that is, a configuration of a part of the apparatus).

Note that, in the present embodiment, the system means a set of a plurality of components (apparatuses, modules (parts), and the like), and it does not matter whether or not all the components are in the same housing. Thus, a plurality of apparatuses housed in separate housings and connected to each other via a network, and one apparatus in which a plurality of modules is housed in one housing are both systems.

Furthermore, for example, the present embodiment can adopt a configuration of cloud computing in which one function is shared and processed by a plurality of apparatuses in cooperation via a network.

Furthermore, the effects of the embodiments described in the present specification are merely examples and are not limited, and other effects may be provided.

Note that, the present technology can also have the following configurations.
(1) An information processing apparatus comprising
   a control unit that acquires, from a terminal apparatus, terminal information regarding the terminal apparatus, and
   controls a mobile network via a Network Exposure Function (NEF) or a Service Capability Exposure Function (SCEF) on a basis of the terminal information.
(2) The information processing apparatus according to (1), wherein the control unit acquires the terminal information via a network slice set between the information apparatus and the terminal apparatus.
(3) The information processing apparatus according to (2), wherein the network slice is set to acquire the terminal information.
(4) The information processing apparatus according to (2) or (3), wherein the control unit sets the network slice in a configuration according to a service to be provided to the terminal apparatus.
(5) The information processing apparatus according to any one of (1) to (4), wherein the terminal information includes at least one of communication information regarding wireless communication between the terminal apparatus and the mobile network, state information regarding a state of the terminal apparatus, or service information regarding a service to be provided to the terminal apparatus.
(6) The information processing apparatus according to any one of (1) to (5), wherein the terminal information includes measurement information.
(7) The information processing apparatus according to (6), wherein the measurement information includes at least one of information regarding a wireless environment in a wireless link with a base station, information related to mobility, information regarding a terminal state, or QoS information.
(8) The information processing apparatus according to any one of (1) to (7), wherein the control unit periodically acquires the terminal information.
(9) The information processing apparatus according to any one of (1) to (8), wherein the control unit notifies the terminal apparatus of acquisition information for acquiring the terminal information.
(10) The information processing apparatus according to (9), wherein the acquisition information includes at least one of type information regarding a type of the terminal information or timing information regarding a transmission timing of the terminal information.
(11) The information processing apparatus according to any one of (1) to (10), wherein
   the control unit
   analyzes and/or predicts a communication status with the terminal apparatus on a basis of the terminal information, and
   controls the mobile network on a basis of results of analysis and/or prediction.
(12) An information processing system comprising:
   a terminal apparatus;
   a mobile network including a base station that performs wireless communication with the terminal apparatus; and
   an information processing apparatus that communicates with the terminal apparatus via the mobile network, wherein
   the information processing apparatus includes:
      a control unit that acquires, from the terminal apparatus, terminal information regarding the terminal apparatus, and
      controls the mobile network via a Network Exposure Function (NEF) or a Service Capability Exposure Function (SCEF) on a basis of the terminal information.
(13) A program for causing an information processing apparatus to function as
   a control unit that
   acquires, from a terminal apparatus, terminal information regarding the terminal apparatus, and
   controls a mobile network via a Network Exposure Function (NEF) or a Service Capability Exposure Function (SCEF) on a basis of the terminal information. Reference Signs List

1 COMMUNICATION SYSTEM
10 THIRD PARTY SYSTEM
20 MOBILE NETWORK
40 TERMINAL APPARATUS
100 INFORMATION PROCESSING APPARATUS
110 NETWORK COMMUNICATION UNIT
120, 420 STORAGE UNIT
130, 430 CONTROL UNIT
200 CORE NETWORK
300 BASE STATION
410 WIRELESS COMMUNICATION UNIT
500 THIRD PARTY CLIENT

## Claims

1. An information processing apparatus comprising
a control unit that acquires, from a terminal apparatus, terminal information regarding the terminal apparatus, and
controls a mobile network via a Network Exposure Function (NEF) or a Service Capability Exposure Function (SCEF) on a basis of the terminal information.

2. The information processing apparatus according to claim 1, wherein the control unit acquires the terminal information via a network slice set between the information apparatus and the terminal apparatus.

3. The information processing apparatus according to claim 2, wherein the network slice is set to acquire the terminal information.

4. The information processing apparatus according to claim 2, wherein the control unit sets the network slice in a configuration according to a service to be provided to the terminal apparatus.

5. The information processing apparatus according to claim 1, wherein the terminal information includes at least one of communication information regarding wireless communication between the terminal apparatus and the mobile network, state information regarding a state of the terminal apparatus, or service information regarding a service to be provided to the terminal apparatus.

6. The information processing apparatus according to claim 1, wherein the terminal information includes measurement information.

7. The information processing apparatus according to claim 6, wherein the measurement information includes at least one of information regarding a wireless environment in a wireless link with a base station, information related to mobility, information regarding a terminal state, or QoS information.

8. The information processing apparatus according to claim 1, wherein the control unit periodically acquires the terminal information.

9. The information processing apparatus according to claim 1, wherein the control unit notifies the terminal apparatus of acquisition information for acquiring the terminal information.

10. The information processing apparatus according to claim 9, wherein the acquisition information includes at least one of type information regarding a type of the terminal information or timing information regarding a transmission timing of the terminal information.

11. The information processing apparatus according to claim 1, wherein
the control unit
analyzes and/or predicts a communication status with the terminal apparatus on a basis of the terminal information, and
controls the mobile network on a basis of results of analysis and/or prediction.

12. An information processing system comprising:
a terminal apparatus;
a mobile network including a base station that performs wireless communication with the terminal apparatus; and
an information processing apparatus that communicates with the terminal apparatus via the mobile network, wherein
the information processing apparatus includes:
a control unit that acquires, from the terminal apparatus, terminal information regarding the terminal apparatus, and
controls the mobile network via a Network Exposure Function (NEF) or a Service Capability Exposure Function (SCEF) on a basis of the terminal information.

13. A program for causing an information processing apparatus to function as
a control unit that
acquires, from a terminal apparatus, terminal information regarding the terminal apparatus, and
controls a mobile network via a Network Exposure Function (NEF) or a Service Capability Exposure Function (SCEF) on a basis of the terminal information.
